# EUROPÄISCHE PATENTSCHRIFT

(11) **EP 2 862 702 B1**
(45) Veröffentlichungstag und Bekanntmachung des Hinweises auf die Patenterteilung: **14.09.2016**
(21) Anmeldenummer: 14178106.2
(22) Anmeldetag: 23.07.2014
(51) Int. Cl.: B29D 30/00, B60C 19/00

(54) **Verfahren zum Verbinden eines Schallabsorbers aus einem Schaumstoffmaterial mit der Reifeninnenseite eines Fahrzeugreifens**
Method for connecting an acoustic absorber made of foam material with the tyre interior of a vehicle tyre
Procédé de liaison d'un absorbeur de bruit en mousse à l'intérieur d'un pneumatique de véhicule

(30) Priorität: 11.10.2013 DE 102013111239
(43) Veröffentlichungstag der Anmeldung: 22.04.2015
(73) Patentinhaber: Continental Reifen Deutschland GmbH, 30165 Hannover (DE)
(72) Erfinder: Neuber, Cord-Christian, 31515 Wunstorf (DE); Schürmann, Oliver, 30855 Langenhagen (DE); Özdogan, Gültekin, 30419 Hannover (DE); Komischke, Ralf, 31275 Lehrte (DE); Loerke, Thomas, 30851 Langenhagen (DE)
(74) Vertreter: Widjaja, Wira

(56) Entgegenhaltungen:
- JP-A- 2008 006 783
- JP-A- 2008 254 338
- JP-A- 2009 160 762

## Beschreibung

Die Erfindung betrifft ein Verfahren zum Verbinden eines Schallabsorbers aus einem Schaumstoffmaterial mit der Reifeninnenseite eines Fahrzeugreifens.

Bei bestimmten Fahrzeugreifen werden im Reifenhohlraum auf der Reifeninnenseite sogenannte Schallabsorber angeordnet, die zur Verbesserung der Reifenakustik dienen. Die Schallabsorber werden in der Regel manuell auf der Reifeninnenseite montiert. Eine derartige Montage ist mit einem relativ hohen Aufwand verbunden und kann zu Positionierungenauigkeiten im Reifenhohlraum führen.
Die JP 2009 160762 A, JP 2008 006783 A und JP 2008 254338 A offenbaren bekannte Montagevorrichtungen.

Der Erfindung lag die Aufgabe zugrunde, ein Verfahren bereitzustellen, mit dem der Schallabsorber auf einfache Weise auf der Reifeninnenseite des Fahrzeugreifens montiert wird.

Gelöst wird die Aufgabe gemäß Anspruch 1.

Ein Vorteil der Erfindung ist insbesondere darin zu sehen, dass durch das erfindungsgemäße Verfahren eine einfache und schnelle Montage des Schallabsorbers auf der Reifeninnenseite erfolgt. Der Schallabsorber lässt sich mit der Zuführeinheit mit einer hohen Zyklusgeschwindigkeit und Positioniergenauigkeit auf der Reifeninnenseite des Fahrzeugreifens montieren. Außerdem kann mit der Zuführeinheit ein gleichmäßiger Anpressdruck auf den Schallabsorber aufgebracht werden, um diesen fest mit der klebenden Materialschicht auf der Reifeninnenseite zu verbinden. Dadurch wird insbesondere eine hohe Verbindungsfestigkeit zwischen Schallabsorber und Reifeninnenseite erzielt.

In einer vorteilhaften Weiterbildung der Erfindung ist vorgesehen, dass bei Schritt e) und f) der Fahrzeugreifen beim Verbinden des Schallabsorbers in einer rotierenden Bewegung um die Zuführeinheit geführt wird. Auf diese Weise lässt sich der Schallabsorber mit einer hohen Montagegeschwindigkeit mit der Reifeninnenseite verbinden.

Es ist vorgesehen, dass das Haltemittel ein Montagetisch ist und bei Schritt c) bis f) der Fahrzeugreifen horizontal auf dem Montagetisch mit beweglichen Rollen aufliegt, wodurch der Fahrzeugreifen in der Ebene in alle Richtungen frei beweglich gelagert ist. Dadurch lässt sich auf einfache Weise ein gleichmäßiger Anpressdruck auf den Fahrzeugreifen anbringen, um den Schallabsorber fest mit der Reifeninnenseite zu verbinden.

In einer weiteren vorteilhaften Weiterbildung der Erfindung ist vorgesehen, dass die Zuführeinheit drehbar ist und das Verbinden des Schallabsorbers mit der Reifeninnenseite unterstützt. Dadurch kann insbesondere in der Anfangsphase des Montageprozesses einem Einklemmen des innenliegenden Materialendes des Schallabsorbers entgegengewirkt werden.

In einer weiteren vorteilhaften Weiterbildung der Erfindung ist vorgesehen, dass die Zuführeinheit ein Trennmittel aufweist, welches zwischen den überlappenden Materialenden des Schallabsorbers angeordnet ist und ein Einklemmen des inneren Materialendes des Schallabsorbers verhindert. Dadurch kann der Schallabsorber mit einer hohen Montagegeschwindigkeit auf der Reifeninnenseite befestigt werden.

In einer weiteren vorteilhaften Weiterbildung der Erfindung ist vorgesehen, dass das Trennmittel eine Andrückrolle umfasst, welches beim Verbindungsprozess den Schallabsorber kontinuierlich gegen die Reifeninnenseite drückt. Mit dem Andrückmittel wird ein gleichmäßiger Anpressdruck auf den Schallabsorber aufgebracht.

In einer weiteren vorteilhaften Weiterbildung der Erfindung ist vorgesehen, dass die Zuführeinheit ein Haltemittel für den Schallabsorber aufweist, welches an der Außenseite des aufgewickelten Schallabsorbers anliegt. Dadurch wird ein Verrutschen des äußeren Materialendes des Schallabsorbers im Prozess der Montage effektiv verhindert.

In einer weiteren vorteilhaften Weiterbildung der Erfindung ist vorgesehen, dass das Haltemittel der Zuführeinheit einen Auslass für eine Führung des Schallabsorbers aufweist. Mit dem Auslass lässt sich die Führung des Schallabsorbers gegenüber der Andrückrolle verbessern. Dadurch wird eine bessere Positioniergenauigkeit des Schallabsorbers auf der Reifeninnenseite erreicht.

In einer weiteren vorteilhaften Weiterbildung der Erfindung ist vorgesehen, dass die Zuführeinheit eine Höhenverstellung aufweist mit der der Schallabsorber in einer vorgegebenen Höhenabmessung zur Reifeninnenseite positioniert wird. Dadurch lässt sich die Zuführeinheit für unterschiedliche Reifendimensionen einsetzen. Der Schallabsorber lässt sich außerdem einfach in unterschiedlichen Höhenbereichen auf der Reifeninnenseite positionieren. Es lässt sich auch eine außermittige Positionierung umsetzen.

In einer weiteren vorteilhaften Weiterbildung der Erfindung ist vorgesehen, dass die klebende Materialschicht auf der Reifeninnenseite ein Dichtmittel für eine Reifenundichtigkeit umfasst. Dadurch besitzt der Fahrzeugreifen ebenfalls eine erhöhte Pannensicherheit.

Anhand eines Ausführungsbeispiels soll die Erfindung näher erläutert werden. Es zeigt:
Fig. 1: ein Ausführungsbeispiel des erfindungsgemäßen Verfahrens
Fig. 2: eine Seitenansicht des Verfahrens
Fig. 3: ein Ausführungsbeispiel für die Zuführeinheit
Fig. 4: einen Fahrzeugreifen mit einem Schallabsorber in einer dreidimensionalen Ansicht
Fig. 5: ein Ausführungsbeispiel für die Zuführeinheit
Fig. 6: eine automatische Montagevorrichtung

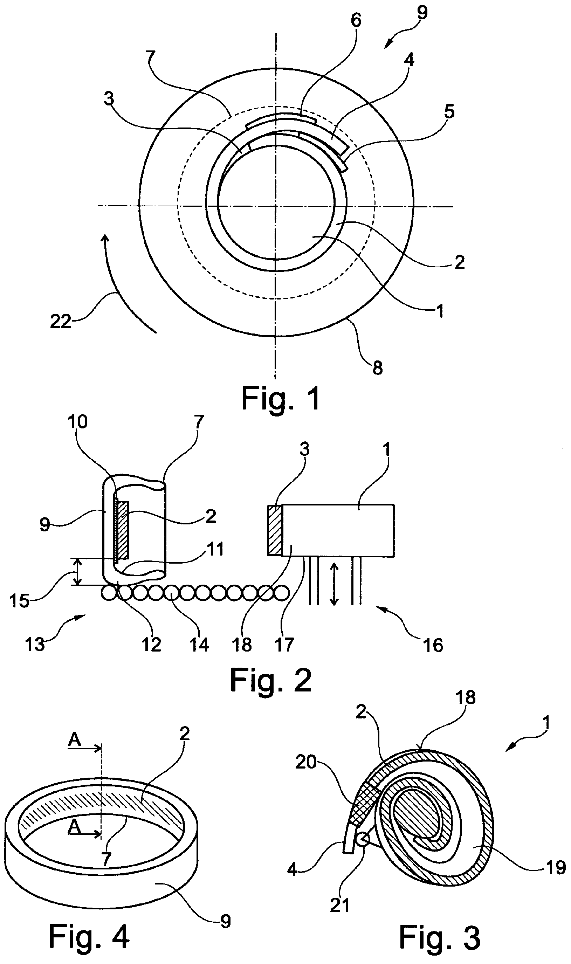

Die Fig. 1 zeigt ein Ausführungsbeispiel des erfindungsgemäßen Verfahrens. Die Zuführeinheit 1 und der schematisch dargestellte Fahrzeugreifen 9 sind in einer Aufsicht dargestellt. Zunächst wird der Schallabsorber 2 an der Zuführeinheit 1 positioniert, wobei das innere Materialende und das äußere Materialende schneckenförmig und überlappend angeordnet werden. Auf diese Weise weist der Schallabsorber 2 im aufgewickelten Zustand einen kleineren Außendurchmesser auf im Vergleich zum Innendurchmesser 7 am Reifenwulst des Fahrzeugreifens 9. Zwischen dem inneren Materialende 3 und dem äußeren Materialende 4 des Schallabsorbers ist ein Trennmittel 5 an der Zuführeinheit 1 angeordnet, wodurch ein Einklemmen des inneren Materialendes verhindert wird. Außerdem weist die Zuführeinheit 1 ein Haltemittel 6 zur Fixierung des äußeren Materialendes 4 des Schallabsorbers 2 auf. Nachdem der Schallabsorber 2 auf der Zuführeinheit 1 positioniert wurde, wird der Fahrzeugreifen 9 koaxial zur Zuführeinheit 1 angeordnet. Anschließend wird der Fahrzeugreifen 9 mit der Reifeninnenseite 8 gegen das äußere Materialende 4 des Schallabsorbers gedrückt und mit der klebenden Materialschicht auf der Reifeninnenseite 8 verbunden. Danach wird der Fahrzeugreifen in Rotationsrichtung 22 bewegt, wodurch kontinuierlich alle Teilbereiche des Schallabsorbers nacheinander mit der Reifeninnenseite 8 verbunden werden.

Fig. 2 zeigt das Verfahren schematisch in einer Seitenansicht. Der Fahrzeugreifen 9 weist auf der Reifeninnenseite 11 eine klebende Materialschicht 10 auf. Der Schallabsorber wird in einer vorgegebenen Höhenpositionierung 15 mit der Reifeninnenseite 11 verbunden. Beim Montageprozess liegt die Reifenseitenwand 12 auf einem Montagetisch 13 mit beweglichen Rollen 14 auf. Durch die Rollen 14 ist der Fahrzeugreifen 9 auf dem Montagetisch 13 in allen Richtungen frei beweglich gelagert. Die Zuführeinheit 1 befindet sich in der Anfangsphase in der Mitte des Fahrzeugreifens 9 und ist über die Höhenverstellung 16 in der Höhe variabel gelagert. Die Zuführeinheit 1 kann auch außermittig sein, um z.B. ein vorzeitiges Ankleben an Punkt 4 zu vermeiden. Die Unterseite der Zuführeinheit weist eine geschlossene Bodenplatte 17 auf, durch die der Schallabsorber 2 gehalten wird. Außerdem kann die Zuführeinheit 1 eine schneckenförmige Zuführung aufweisen, wie sie in Fig. 3 dargestellt ist.

Fig. 3 zeigt ein Ausführungsbeispiel, bei dem die Zuführeinheit 1 eine schneckenförmige Zuführung 18 aufweist, in der der Schallabsorber 2 komplett eingeschlossen ist. Die Oberseite der Zuführeinheit 1 ist offen, wodurch das Einsetzen des Schallabsorbers vereinfacht wird. Das äußere Materialende 4 des Schallabsorbers wird durch den Auslass 20 zur Führung des Schallabsorbers 2 gehalten. Beim Montageprozess drückt die Andrückrolle 21 den Schallabsorber mit einem konstanten Anpressdruck gegen die klebende Materialschicht auf der Reifeninnenseite. Beim Montageprozess wird der Schallabsorber anschließend aus dem Auslass 20 der Zuführeinheit 1 heraus bewegt.

Fig. 4 zeigt den auf der Reifeninnenseite montierten Schallabsorber 2 in einer dreidimensionalen Ansicht. Im Normalfall wird der Schallabsorber 2 so auf der Reifeninnenseite montiert, dass sich zwischen den beiden gegenüberliegenden Materialenden eine Lücke von ca. 20 mm befindet.

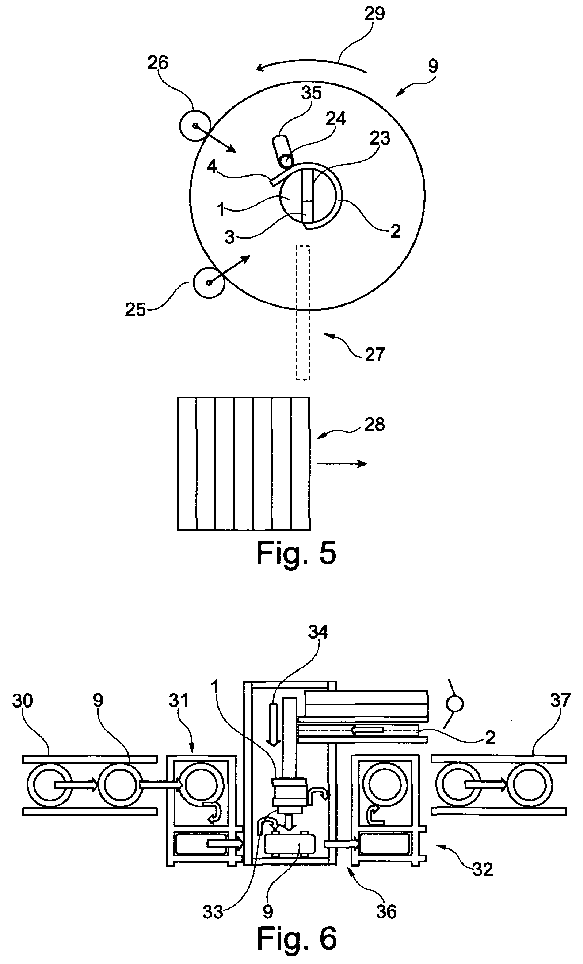

Fig. 5 zeigt ein weiteres Ausführungsbeispiel für die Montage eines Schallabsorbers. In einem Magazin 28 wird eine Vielzahl von Schallabsorbern in einer bestimmten Länge bereitgestellt. Zunächst wird aus diesem Magazin 28 ein Schallabsorber 27 entnommen und in Richtung der Zuführeinheit 1 transportiert. Die Zuführeinheit ist in Fig. 1 in einer Aufsicht dargestellt. Das innere Materialende 3 wird als erstes in die schlitzförmige Aufnahme 23 an der Zuführeinheit 1 eingesteckt. Anschließend dreht sich die Zuführeinheit 1 im Uhrzeigersinn, wodurch der Schallabsorber 2 schneckenförmig bzw. kreisförmig an der Zuführeinheit 1 angeordnet wird. Das Haltemittel 24 klemmt das äußere Materialende 24 zwischen der Zuführeinheit 1 und dem Haltemittel 24 ein. An der Oberseite des stangenförmigen Haltemittels 24 kann ein zusätzliches Haltemittel 35 angeordnet sein, welches den oberen Reifenwulst in einer vorgegebenen Position hält. Die Positionierung des oberen Reifenwulstes mit dem Haltemittel 35 kann erforderlich sein, um bei der Montage des Schallabsorbers die Seitenwand des Fahrzeugreifens nach oben zu halten. Nachdem der Schallabsorber 2 in der dargestellten Form an der Zuführeinheit 1 positioniert wurde, wird der Fahrzeugreifen 9 in Montageposition gebracht. Die erste und die zweite Andrückrolle 25 und 26 drücken nachfolgend den Fahrzeugreifen 9 mit einer vorgegebenen Andrückkraft in Richtung der Zuführeinheit 1. Das äußere Materialende 4 wird gegen die Reifeninnenseite des Fahrzeugreifens 9 gedrückt und mit dieser verklebt. Anschließend rotieren die beiden Andrückrollen 25 und 26, so dass der Fahrzeugreifen 9 gegen den Uhrzeigersinn dreht. Bei dieser Rotationsbewegung des Fahrzeugreifens wird der Schallabsorber 2 über seinen Umfang vollständig mit der Reifeninnenseite verbunden. Bei diesem Vorgang kann die Zuführeinheit 1 ebenfalls in die gleiche Richtung mit rotieren, um den Montageprozess zu unterstützen.

Fig. 6 zeigt ein weiteres Ausführungsbeispiel für die Montage des Schallabsorbers. Die gesamte Vorrichtung ist in einer Aufsicht dargestellt. Die einzelnen Fahrzeugreifen 9 werden auf einer Fördervorrichtung 30 in der dargestellten Weise transportiert. In der Kippvorrichtung 31 werden die liegenden Fahrzeugreifen 9 in eine aufrechte Position gebracht. Anschließend wird der Fahrzeugreifen 9 in die Montagestation 36 verfahren. Die Zuführeinheit 1 ist an einer Welle gelagert, die in Bewegungsrichtung 34 verfahren werden kann. Zunächst wird ein einzelner Schallabsorber 2 an der Zuführeinheit 1 schneckenförmig bzw. kreisförmig angeordnet. Anschließend verfährt die Zuführeinheit 1 in Bewegungsrichtung 34 in den aufrecht stehenden Fahrzeugreifen 9. Mit dem Laser 33 erfolgt eine Abstandsmessung zum Fahrzeugreifen, wodurch der Schallabsorber in einer genau vorgegebenen Position auf die Reifeninnenseite montiert werden kann. Anschließend wird der Fahrzeugreifen 9 gegen die Zuführeinheit 1 gedrückt, um damit die Montage des Schallabsorbers 2 einzuleiten. Die Montage des Schallabsorbers erfolgt anschließend so wie es in Fig. 1 oder in Fig. 5 dargestellt ist. Nach der Montage des Schallabsorbers auf der Reifeninnenseite des Fahrzeugreifens 9 wird der Fahrzeugreifen zur Kippvorrichtung 32 transportiert. In dieser Kippvorrichtung 32 wird der Fahrzeugreifen 9 wieder in eine liegende Position gebracht. Abschließend werden die Fahrzeugreifen mit der Fördervorrichtung 37 weitertransportiert.

### Bezugszeichenliste

### (ist Teil der Beschreibung)

- 1: Zuführeinheit
- 2: Schallabsorber
- 3: Inneres Materialende des Schallabsorbers
- 4: äußeres Materialende des Schallabsorbers
- 5: Trennmittel bzw. Trennvorrichtung zwischen überlappenden Materialenden
- 6: Haltemittel
- 7: Innendurchmesser am Reifenwulst
- 8: Position der Reifeninnenseite
- 9: Fahrzeugreifen
- 10: Klebende Materialschicht
- 11: Reifeninnenseite
- 12: Reifenseitenwand
- 13: Montagetisch
- 14: bewegliche Rollen
- 15: Höhenabmessung bzw. Höhenpositionierung auf der Reifeninnenseite
- 16: Höhenverstellung für Zuführeinheit
- 17: Geschlossene Bodenplatte der Zuführeinheit
- 18: Schneckenförmige Zuführung aus Blech
- 19: Offene Oberseite der Zuführeinheit zum Einsetzen des Schallabsorbers
- 20: Auslass für eine Führung des Schallabsorbers
- 21: Andrückrolle
- 22: Rotationsrichtung des Fahrzeugreifens
- 23: Schlitzförmige Aufnahme für Inneres Materialende des Schallabsorbers
- 24: Haltemittel für äußeres Materialende des Schallabsorbers
- 25: Erste Andrückrolle für Reifen
- 26: Zweite Andrückrolle für Reifen
- 27: Schallabsorber vor dem Anordnen an der Zuführeinheit
- 28: Magazin mit mehreren Schallabsorbern
- 29: Rotationsrichtung bei Schallabsorbermontage
- 30: Fördervorrichtung
- 31: Kippvorrichtung
- 32: Kippvorrichtung
- 33: Laser zum Abtasten von Abständen
- 34: Bewegungsrichtung für Zuführeinheit
- 35: Haltemittel für obere Seitenwand
- 36: Montagestation
- 37: Fördervorrichtung

## Patentansprüche

1. Verfahren zum Verbinden eines Schallabsorbers (2) aus einem Schaumstoffmaterial mit der Reifeninnenseite (11) eines Fahrzeugreifen mit folgenden Schritten:
a) Anordnen einer klebenden Materialschicht (10) auf der Reifeninnenseite (11) des Fahrzeugreifens (9),
wobei mit der klebenden Materialschicht (10) zumindest die Reifeninnseite (11) zwischen den beiden Reifenschultern abgedeckt wird,
b) Anordnen eines Schallabsorbers (2) mit einer vorgegeben Materialläge an einer Zuführeinheit (1),
wobei der Schallabsorber (2) schneckenförmig an der Zuführeinheit (1) aufgewickelt ist,
wobei der Außendurchmesser des aufgewickelten Schallabsorbers (2) kleiner ist als der Innendurchmesser (7) am Reifenwulst des Fahrzeugreifens (9),
c) Anordnen des Fahrzeugreifens (9) koaxial zur Zuführeinheit (1) mit dem aufgewickelten Schallabsorber (2),
wobei eine der Seitenwände (12) des Fahrzeugreifens (9) durch ein Haltemittel (13) gehalten wird,
d) Verbinden eines Teilbereiches (4) des Schallabsorbers (2) mit der Reifeninnenseite (11) des Fahrzeugreifens (9),
wobei der Teilbereich (4) des Schallabsorbers (2) über einen Andrückvorgang fest gegen die klebende Materialschicht (10) auf der Reifeninnenseite (11) gedrückt wird,
e) Verbinden der weiteren Bereiche des Schallabsorbers (2),
wobei der Schallabsorber (2) mit einem Anpressdruck und einer rotierenden Bewegung kontinuierlich gegen die Reifeninnenseite (11) gedrückt wird,
wobei der Schallabsorber (2) mit der klebenden Materialschicht (10) fest auf der Reifeninnenseite (11) des Fahrzeugreifens (9) montiert wird,
f) Weiterführen des Verbindens von Schallabsorber (2) und Reifeninnenseite (11) bis der Schallabsorber (2) vollständig in allen Teilbereichen an die Reifeninnenseite (11) angebunden ist,
**dadurch gekennzeichnet, dass**
das Haltemittel ein Montagetisch (13) ist und bei Schritt c) bis f) der Fahrzeugreifen (9) horizontal auf dem Montagetisch (13) mit beweglichen Rollen (14) aufliegt, wodurch der Fahrzeugreifen (9) in der Ebene in alle Richtungen frei beweglich gelagert ist.

2. Verfahren nach Anspruch 1,
**dadurch gekennzeichnet, dass**
bei Schritt e) und f) der Fahrzeugreifen (9) beim Verbinden des Schallabsorbers (2) in einer rotierenden Bewegung um die Zuführeinheit (1) geführt wird.

3. Verfahren nach einem der vorhergehenden Ansprüche,
**dadurch gekennzeichnet, dass**
bei Schritt b) die Materialenden (3, 4) des Schallabsorbers (2) an der Zurühreinheit überlappend angeordnet sind.

4. Verfahren nach einem der vorhergehenden Ansprüche,
**dadurch gekennzeichnet, dass**
die Zuführeinheit (1) drehbar ist und das Verbinden des Schallabsorbers (2) mit der Reifeninnenseite (11) unterstützt.

5. Verfahren nach einem der vorhergehenden Ansprüche,
**dadurch gekennzeichnet, dass**
die Zuführeinheit (1) ein Trennmittel (5) aufweist, welches zwischen den überlappenden Materialenden (3, 4) des Schallabsorbers (2) angeordnet ist und ein Einklemmen des inneren Materialendes (3) des Schallabsorbers (2) verhindert.

6. Verfahren nach einem der vorhergehenden Ansprüche,
**dadurch gekennzeichnet, dass**
das Trennmittel eine Andrückrolle (21) umfasst, welches beim Verbindungsprozess den Schallabsorber (2) kontinuierlich gegen die Reifeninnenseite (11) drückt.

7. Verfahren nach einem der vorhergehenden Ansprüche,
**dadurch gekennzeichnet, dass**
die Zuführeinheit (1) ein Haltemittel (6) für den Schallabsorber (2) aufweist, welches an der Außenseite des aufgewickelten Schallabsorbers (2) anliegt.

8. Verfahren nach einem der vorhergehenden Ansprüche,
**dadurch gekennzeichnet, dass**
das Haltemittel der Zuführeinheit (1) einen Auslass (20) für eine Führung des Schallabsorbers (2) aufweist.

9. Verfahren nach einem der vorhergehenden Ansprüche,
**dadurch gekennzeichnet, dass**
die Zuführeinheit (1) eine Höhenverstellung (16) aufweist mit der der Schallabsorber (2) in einer vorgegebenen Höhenabmessung (15) zur Reifeninnenseite (11) positioniert wird.

10. Verfahren nach einem der vorhergehenden Ansprüche,
**dadurch gekennzeichnet, dass**
die klebende Materialschicht (10) auf der Reifeninnenseite (11) ein Dichtmittel für eine Reifenundichtigkeit umfasst.

## Claims

1. Method for connecting a sound absorber (2) made of foam material to the tyre interior (11) of a vehicle tyre comprising the following steps:
a) arranging a layer of adhesive material (10) on the tyre interior (11) of the vehicle tyre (9), wherein at least the tyre interior (11) between the two tyre shoulders is covered with the layer of adhesive material (10),
b) arranging a sound absorber (2) of a predetermined material length on a feeding unit (1),
wherein the sound absorber (2) is wound up helically on the feeding unit (1),
wherein the outside diameter of the wound-up sound absorber (2) is less than the inside diameter (7) at the tyre bead of the vehicle tyre (9),
c) arranging the vehicle tyre (9) coaxially in relation to the feeding unit (1) with the wound-up sound absorber (2),
wherein one of the sidewalls (12) of the vehicle tyre (9) is held by a holding means (13),
d) connecting a subregion (4) of the sound absorber (2) to the tyre interior (11) of the vehicle tyre (9),
wherein the subregion (4) of the sound absorber (2) is pressed by a pressure-applying operation firmly against the layer of adhesive material (10) on the tyre interior (11),
e) connecting the further regions of the sound absorber (2),
wherein the sound absorber (2) is continuously pressed against the tyre interior (11) with a pressing pressure and a rotating movement,
wherein the sound absorber (2) is mounted firmly on the tyre interior (11) of the vehicle tyre (9) by the layer of adhesive material (10),
f) continuing the connecting of the sound absorber (2) and the tyre interior (11) until the sound absorber (2) is bonded to the tyre interior (11) in all subregions,
**characterized in that**
the holding means is a mounting table (13) and in steps c) to f) the vehicle tyre (9) rests horizontally on the mounting table (13) with movable rollers (14),
whereby the vehicle tyre (9) is mounted freely movably in all directions in the plane.

2. Method according to Claim 1,
**characterized in that**
in steps e) and f) the vehicle tyre (9) is guided in a rotating movement around the feeding unit (1) when connecting the sound absorber (2).

3. Method according to one of the preceding claims,
**characterized in that**
in step b) the material ends (3, 4) of the sound absorber (2) are arranged overlapping on the feeding unit.

4. The method according to one of the preceding claims,
**characterized in that**
the feeding unit (1) is rotatable and assists the connecting of the sound absorber (2) to the tyre interior (11).

5. Method according to one of the preceding claims,
**characterized in that**
the feeding unit (1) has a releasing means (5), which is arranged between the overlapping material ends (3, 4) of the sound absorber (2) and prevents jamming of the inner material end (3) of the sound absorber (2).

6. Method according to one of the preceding claims,
**characterized in that**
the releasing means comprises a pressure-applying roller (21), which continuously presses the sound absorber (2) against the tyre interior (11) during the connecting process.

7. Method according to one of the preceding claims,
**characterized in that**
the feeding unit (1) has a holding means (6) for the sound absorber (2), which lies against the outside of the wound-up sound absorber (2).

8. Method according to one of the preceding claims,
**characterized in that**
the holding means of the feeding unit (1) has an outlet (20) for guidance of the sound absorber (2).

9. Method according to one of the preceding claims,
**characterized in that**
the feeding unit (1) has a height adjustment (16) with which the sound absorber (2) is positioned in a predetermined height dimension (15) in relation to the tyre interior (11).

10. Method according to one of the preceding claims,
**characterized in that**
the layer of adhesive material (10) on the tyre interior (11) comprises a sealant for making the tyre impermeable.

## Revendications

1. Procédé pour relier un absorbeur de bruit (2) en matériau mousseux au côté intérieur (11) d'un bandage de roue de véhicule, le procédé présentant les étapes suivantes :
a) placement d'une couche (10) de matériau adhésif sur le côté intérieur (11) du bandage de roue de véhicule (9), le côté intérieur (11) du bandage de roue étant recouvert par la couche (10) de matériau adhésif au moins entre les deux épaulements du bandage de roue,
b) placement d'un absorbeur de bruit (2) en une position prédéterminée du matériau sur une unité d'amenée (1), l'absorbeur de bruit (2) étant enroulé en hélice sur l'unité d'amenée (1) et le diamètre extérieur de l'absorbeur de bruit (2) enroulé étant inférieur au diamètre intérieur (7) du bourrelet du bandage de roue du véhicule (9),
c) placement du bandage de roue de véhicule (9) coaxialement par rapport à l'unité d'amenée (1) sur laquelle est enroulé l'absorbeur de bruit (2), l'une des parois (12) du bandage (9) de roue de véhicule étant maintenue par un moyen de maintien (13),
d) liaison d'une partie (4) de l'absorbeur de bruit (2) au côté intérieur (11) du bandage (9) de roue de véhicule, la partie (4) de l'absorbeur de bruit (2) étant fixée par une opération de poussée contre la couche (10) de matériau adhésif placée sur le côté intérieur (11) du bandage de roue,
e) liaison des autres parties de l'absorbeur de bruit (2), l'absorbeur de bruit (2) étant repoussé de manière continue contre le côté intérieur (11) du bandage de roue par une poussée et un déplacement de rotation, l'absorbeur de bruit (2) étant fixé par la couche (10) de matériau adhésif sur le côté intérieur (11) du bandage (9) de roue de véhicule,
f) poursuite de la liaison de l'absorbeur de bruit (2) et du côté intérieur (11) du bandage de roue jusqu'à ce que l'absorbeur de bruit (2) ait été relié à la totalité du côté intérieur (11) du bandage de roue, **caractérisé en ce que**
le moyen de maintien est une table de montage (13) et **en ce que** dans les étapes c) à f), le bandage (9) de roue de véhicule repose horizontalement sur la table de montage (13) dotée de rouleaux mobiles (14), grâce à quoi le bandage (9) de roue de véhicule est monté dans le plan en pouvant se déplacer librement dans toutes les directions.

2. Procédé selon la revendication 1, **caractérisé en ce qu'**aux étapes e) et f), lors de la liaison de l'absorbeur de bruit (2), le bandage (9) de roue du véhicule est guidé autour de l'unité d'amenée (1) dans un déplacement de rotation.

3. Procédé selon l'une des revendications précédentes, **caractérisé en ce qu'**à l'étape b), les extrémités (3, 4) du matériau de l'absorbeur de bruit (2) sont superposées sur l'unité d'amenée.

4. Procédé selon l'une des revendications précédentes, **caractérisé en ce que** l'unité d'amenée (1) est rotative et soutient la liaison de l'absorbeur de bruit (2) avec le côté intérieur (11) du bandage de roue.

5. Procédé selon l'une des revendications précédentes, **caractérisé en ce que** l'unité d'amenée (1) présente un moyen de séparation (5) qui est disposé entre les extrémités superposées (3, 4) du matériau de l'absorbeur de bruit (2) et qui empêche que l'extrémité intérieure (3) du matériau de l'absorbeur de bruit (2) se coince.

6. Procédé selon l'une des revendications précédentes, **caractérisé en ce que** le moyen de séparation comporte un rouleau de poussée (21) qui repousse de manière continue l'absorbeur de bruit (2) contre le côté intérieur (11) du bandage de roue lors de l'opération de liaison.

7. Procédé selon l'une des revendications précédentes, **caractérisé en ce que** l'unité d'amenée (1) présente un moyen de maintien (6) de l'absorbeur de bruit (2) qui repose sur le côté extérieur de l'absorbeur de bruit (2) enroulé.

8. Procédé selon l'une des revendications précédentes, **caractérisé en ce que** le moyen de maintien de l'unité d'amenée (1) présente une sortie (20) permettant de guider l'absorbeur de bruit (2).

9. Procédé selon l'une des revendications précédentes, **caractérisé en ce que** l'unité d'amenée (1) présente un ajustement en hauteur (16) par lequel l'absorbeur de bruit (2) est positionné à un niveau de hauteur prédéterminé (15) par rapport au côté intérieur (11) du bandage de roue.

10. Procédé selon l'une des revendications précédentes, **caractérisé en ce que** la couche (10) de matériau adhésif comporte sur le côté intérieur (11) du bandage de roue un moyen d'étanchéité permettant de réparer un défaut d'étanchéité du bandage de roue.
